# EUROPEAN PATENT APPLICATION

(11) **EP 4 818 891 A1**
(43) Date of publication of application: **07.10.2026**
(21) Application number: 26168513.5
(22) Date of filing: 27.03.2026
(51) Int. Cl.: G06F 8/658

(54) **A METHOD AND A DEVICE FOR UPDATING SOFTWARE IN A VEHICLE**

(30) Priority: 30.03.2025 IN 202541031425
(71) Applicant: TVS Motor Company Limited, 600006 Chennai (IN)
(72) Inventor: Gudi, Venkata Ramana, 600006 Chennai (IN)
(74) Representative: Patentanwaltskanzlei Matschnig & Forsthuber OG

(57) **Abstract**

The claimed subject matter discloses a method 200 and a controller 102 for updating software in the vehicle 105. The software may be updated in the vehicle controller 102. The method 200 comprises receiving a software update request from a server 106 or diagnostic tool 107, analyzing the software update request to determine which attributes are impacted, extracting from the software update request the parameters that control the impacted attributes. The method 200 further comprises verifying that the extracted parameters are within required safe performance limits, rejecting the software update request when the extracted parameters are not within the required safe performance limits and updating the present parameters in the software with the extracted parameters when the extracted parameters are within the required safe performance limits.

## Description

### TECHNICAL FIELD

The claimed subject matter in general relates to updating software in a vehicle. The claimed subject matter in particular relates to updating parameters used by the software in a vehicle controller to improve the performance of the vehicle. The claimed subject matter relates also to monitoring the vehicle performance after updating the parameters and a fallback solution if the updating has a negative impact on the performance of the vehicle.

### BACKGROUND

Software updating in vehicle is known in the arts. The software updating may be Over The Air, OTA, or through diagnostic tools, where the vehicle control unit in the vehicle receives newer version of the software, over-writes the existing version of the software and runs the newer version of the software. The software may be for an entire operation of the vehicle control unit or for bug fixes, new feature implementations or for a new sub-system in the vehicle.

In the known arts, the software updates often require modifying the entire software logic governing vehicle attributes, leading to time-consuming and complex reprogramming. Large software updates require high bandwidth, long installation times, and vehicle downtime, making frequent updates impractical.

Significant changes to vehicle attributes because of large software updates, often require revalidation and regulatory approval, which can be a long and costly process.

Large software updates that modify attributes of the vehicle control system, can introduce unintended software bugs affecting vehicle safety.

Drivers often have limited control over vehicle behavior, as software attributes remain fixed unless manually adjusted by a service technician. Downloading the parameters Over-The- Air provides opportunity for the user to receive latest parameters sent by the server 106 without having too much down-time of the vehicle. This may solve some of the issues in the vehicle which otherwise world not be possible unless the vehicle is taken to a service station.

Every major software change requires extensive development, testing, and deployment effort, increasing maintenance costs. Instead, the manufacturers can use parameter only updates wherever possible reducing the development and maintenance costs.

In the known arts, the update mechanisms apply full software packages across multiple vehicle subsystems, even when only minor changes are needed.

Many vehicle updates require post-update safety verification, which can be a long process. Hence, updating only the parameters instead of the software, eliminates post-update safety verification.

Many software updates in the known arts are designed vehicle-model-specific, requiring separate development efforts for each variant. By adapting parameter-only updates, the same updates may be used for different vehicles, models wherever hardware is similar.

There is a need for a software update which updates only the required parameters for required sub-systems in the vehicle to improve the performance of the vehicle. This is efficient, needs less down time, eliminates possibility of impacting other parts of the software.

The claimed subject matter addresses the above discussed issues.

### SUMMARY

The claimed subject matter is defined in the independent claims. Further details are defined in the dependent claims.

The subject matter discloses a system, a method and a device for software updating. The system comprises a vehicle controller in a vehicle, a server, a diagnostic tool which provide newer versions of the software for downloading.

The subject matter discloses a method of updating software in a vehicle controller. The method is performed by the vehicle controller. The method comprises receiving a software update request from a server or diagnostic tool, analyzing the software update request to determine which attributes are impacted, extracting from the software update request the parameters that control the impacted attributes, verifying that the extracted parameters are within required safe performance limits, rejecting the software update request when the extracted parameters are not within the required safe performance limits and updating the present parameters in the software with the extracted parameters when the extracted parameters are within the required safe performance limits.

The method further discloses generating a notification to the user if the software update request is rejected.

The method further discloses storing the present parameters from the software, as backup parameters in a memory and overwriting the present parameters with the extracted parameters.

The method further discloses determining whether the extracted parameters have a negative impact on the vehicle performance, by performing at least one of running diagnostic algorithms, analyzing Diagnostic Trouble Codes and analyzing system logs.

The method further discloses restoring the backup parameters as present parameters in the software, when the extracted parameters have a negative impact on the vehicle performance.

The method further discloses generating a report and sending it to the server or the service equipment, when the request is rejected, the report comprising the software update version, the extracted parameters, reasons for failure and a time stamp.

The method further discloses comparing the attributes from the request with the present attributes to determine whether there are any new features present in the attributes in the request and updating the present attribute with attribute form the request which have new features, when the extracted parameters do not have a negative impact on the vehicle performance.

### BRIEF DESCRIPTION OF THE DRAWINGS

The detailed description is described with reference to the accompanying figures. In the figures, similar reference numerals are used throughout the drawings to reference like features and components.
Figure 1 illustrates a system for software updating
Figure 2 illustrate a method of software updating

### DESCRIPTION OF THE INVENTION

The claimed subject matter now will be described with exemplary embodiments. However, the claimed subject matter may be embodied in many different forms and should not be construed as limited to the embodiments described herein. These embodiments are provided only as examples so that this disclosure is clear and concise.

Some of the terms used in this document may be used with different expressions and also interchangeably. Some examples are given below.

The term 'Vehicle' may refer to a two wheeled motor vehicle, a three wheeled motor vehicle or a car or any passenger motor vehicle or goods carrying motor vehicle. The vehicle may be an internal combustion driven vehicle or an electric vehicle. The term 'coupled' is used to indicate coupling between different elements, it may mean directly coupled or indirectly coupled through additional elements. The terms 'module' and 'component' may be used interchangeably.

Only the details/components required to describe the claimed subject matter in specific, are disclosed in this document. The details/components which are commonly known or understood by people skilled in the art may not be covered in this document.

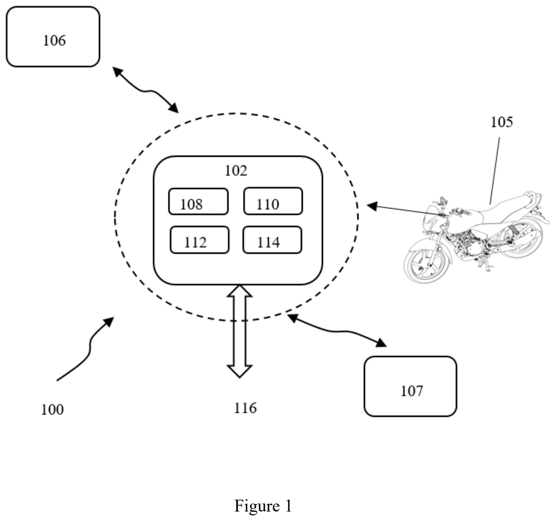

Figure 1 illustrates a system 100 for software updating. The system 100 comprises a vehicle controller 102 in a vehicle 105, a server 106, and a diagnostic tool/service equipment 107. The server 106 and/or the diagnostic tool 107 provide newer versions of the software for downloading. The vehicle controller 102 is referred as controller 102. The vehicle 105 is shown as a two wheeled motor vehicle only as an example. The communication between the controller 102 and the server 106, the diagnostic tool 107 could be any kind of wireless communication or a wired communication.

The controller 102 comprises a processor 108, a memory 110 coupled to the processor 108, input output interfaces 112. In an embodiment the controller 102 comprises a communication unit 114. In an embodiment the communication unit 114 may be external to the controller 102. In an embodiment the communication unit 114 may comprise a GSM module or any kind of module to establish wireless communication or wired communication. The communication unit 114 handles the transmission and reception of data to and from the server 106 and the diagnostic tool 107. The communication unit 114 comprises a transmitter module to transmit data and a receiver module to receive data. The transmitter module and the receiver module may be combined into one as a transceiver. The communication unit 114 may comprise standard hardware and firmware.

The controller 102 receives a software update request. The software update request is referred as request henceforth. The request may be Over the Air, OTA, from a server or a manual request from a diagnostic tool or any other service equipment.

Typically the software update request comprises a list of attributes, the software modules/sub-modules and the parameters which impact the attributes. The software update may be for an entire operation of the vehicle control or for bug fixes, new feature implementations or for a new sub-system in the vehicle 105.

The attribute may refer to a software module or sub-module, which is responsible to control a specific component in the vehicle. Some of the attributes, and their corresponding parameters which impact the attributes, are listed below, as examples. There may be other attributes and parameters.
Attribute: State of Charge (SoC) estimation
Parameters: Voltage thresholds, current draw profile, temperature compensation factors
Attribute: State of Health (SoH) monitoring
Parameters: Charge cycle count, internal resistance trends, temperature degradation coefficient

The above attributes and parameters for battery management system.
Attribute: Throttle response tuning
Parameters: Pedal position-to-throttle mapping, ramp-up rate, idle compensation
Attributes: Regenerative braking control
Parameters: Regenerative intensity level, speed thresholds, deceleration curve
The above attributes and parameters are for Powertrain Control System
Similarly there are attributes for Chassis control, Infotainment system, Advanced Driver
Assistance System, ADAS, HVC system etc.

The controller 102 does not update the software immediately when it receives a request. The controller 102 analyzes the software update request to determine which attributes are impacted. Once the impacted attributes are determined, the controller 102 extracts the corresponding parameters of the attributes from the request. The controller 102 verifies whether the extracted parameters are within required safe performance limits. The safe performance limits may be pre-stored in the controller 102 or downloaded regularly from the diagnostic tool 107 or the server 106. The controller 102 rejects the request when the extracted parameters are not within the required safe performance limits. The Controller 102 generates a notification to the user indicating that the software update request is rejected. The notification may be through a lamp, a beep or an audio output. The notifications may be on the dashboard.

When the extracted parameters are within the required safe performance limits, the controller 102 stores the present parameters corresponding to the impacted attributes as backup parameters in the memory 110. Then the controller 102 overwrites the present parameters with the extracted parameters. Now the software runs with the new parameters which are extracted from the request. The vehicle performance needs to be verified to determine whether the extracted parameters have a negative impact on the vehicle performance. The negative impact may refer to decrease in performance of the vehicle 105. The negative impact may be in terms of efficiency, safety, infotainment output, HVAC output etc. These are only given as examples.

To determine whether there is negative impact on the performance of the vehicle 105, the controller 102 performs at least one of running diagnostic algorithms, analyzing Diagnostic Trouble Codes and analyzing system logs. System logs are the reports recorded at regular intervals regarding the vehicle performance under various conditions, the errors encountered, the underperforming sub-systems of the vehicle etc.

If the controller 102 determines that there is a negative impact on the performance of the vehicle 105, the controller 102 restores the backup parameters as present parameters in the software, i.e. the controller 102 overwrites the extracted parameters with the backup parameters stored earlier. The controller 102 generates a report, the report comprising the software update version, the extracted parameters, reasons for failure and time stamp. The report may be uploaded to server 106 or to the diagnostic tool 107 for analysis.

If there is no negative impact on the vehicle performance, the controller 102 finalizes/retains the update and optimizes the vehicle's performance based on the new parameters. This ensures that the vehicle 105 operates seamlessly with the latest software enhancements while maintaining regulatory compliance and user safety.

In an embodiment, if there is no negative impact on the vehicle performance because of the extracted parameters, the controller 102 compares the existing software modules with the new software module/attributes in the software update request to determine if there are any optimizations or modifications present in the software in the request. If the new software modules/attributes contain optimization features, the controller 102 replaces the existing software modules with the new software modules from the software update request, while ensuring that the extracted parameters are re-applied to the new software module to maintain expected behavior of the vehicle 105.

In an embodiment the controller 102 is stand-alone unit connectable to an electronic control unit, ECU, in a vehicle 105 which controls the vehicle 105. In an embodiment the functionalities of the controller 102 are implemented in the electronic control unit in a vehicle 105 which controls the vehicle 105. In an embodiment the controller 102 and the ECU are one and same unit. In an embodiment, the vehicle controller 102 updates the software in the controller 102 itself. In an embodiment the new software may be transferred to another ECU.

The controller 102 comprises various modules like a receiving module to receive software update request, analysis module to analyze the software update request, verification module to verify software update/extracted parameters etc. These modules are implemented in hardware, firmware or a combination.

The processor 108 may comprise one or more of central processing units (CPU), digital signal processors (DSP), application specific integrated circuits (ASIC), a controller, field programmable gate arrays (FPGA), or any other hardware device, a firmware device, or any combination of these. The processor 108 is configured using control registers, input output ports, firmware, input output interfaces etc. to perform the operations described herein.

In an embodiment, the memory 110 may comprise one or more volatile and non-volatile memory components which are capable of storing data and instructions to be executed.

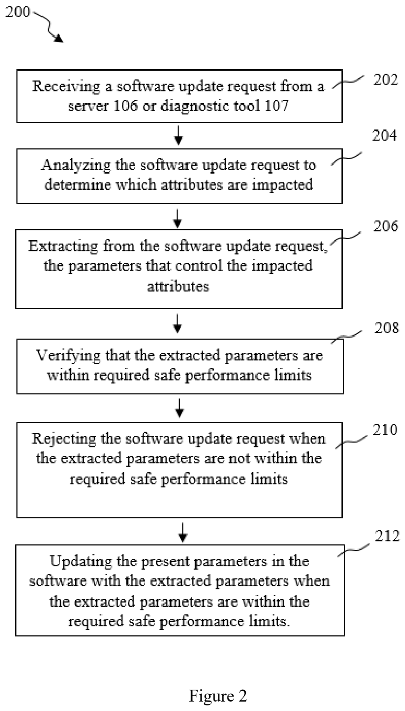

Figure 2 illustrates a method 200 for updating a software in the vehicle 105. Step 202 discloses receiving a software update request from a server 106 or diagnostic tool 107. Step 204 discloses analyzing the software update request to determine which attributes are impacted. Step 206 discloses extracting from the software update request, the parameters that control the impacted attributes. Step 208 discloses verifying that the extracted parameters are within required safe performance limits. Step 210 discloses rejecting the software update request when the extracted parameters are not within the required safe performance limits. Step 212 discloses updating the present parameters in the software with the extracted parameters when the extracted parameters are within the required safe performance limits. Now the software runs with the extracted parameters.

The disclosed subject matter has various technical advantages, some are listed below.

By updating only the determining parameters, the subject matter allows for targeted, lightweight updates. Since parameter updates are much smaller in size, OTA updates can be applied quickly and with minimal disruption to the vehicle's operation, that do not require full-scale software changes. Because only the parameters are updated, the update is faster and the down-time of the vehicle 105 is reduced.

Parameter tuning does not alter the core logic of safety-critical systems/software, thereby reducing the need for full software recertification. As only parameters are updated and not the software itself, the functionality is not affected. Also it is ensured that the parameters are within the required safe performance limits. Hence there is no re-certification needed.

By fine-tuning parameters instead of attributes, the vehicle can adapt to different driving conditions, user preferences, or regulatory requirements without hardware changes. The parameters are updated by the manufactures by analyzing different factors like vehicle condition, terrain, life of vehicle etc. and sent through Over The Air, downloading of parameters into the vehicle leads to better driving conditions of the vehicle and overall better performance of the vehicle.

Parameter updates allow controlled modifications with minimal risk of new failures, ensuring safer and more reliable vehicle behavior. As only the parameters are updated and not the software module itself, there are no chances of new failures getting introduced because of updating the parameters.

By allowing updates at the parameter level, automakers can reduce costs, improve update efficiency, and extend vehicle lifespan without frequent full-software redeployment. If only parameters need to be updated in the vehicle, the server 106 can send only the parameters Over The Air. This will help automakers to reduce costs of sending full updates. As no frequent software updates are involved, the vehicle lifespan is extended.

### LIST OF REFERENCE NUMERALS

- 100: System for updating software in a vehicle controller
- 102: Vehicle controller
- 106: Server
- 107: Diagnostic tool
- 108: Processor
- 110: Memory
- 112: Input Output interfaces
- 114: Communication unit

## Claims

1. A method (200) for updating a software in a vehicle (105), the method (200) performed by a vehicle controller (102), the method (200) comprising:
receiving (202) a software update request, the software update request being from Over the Air request from a server (106) or from a service equipment (107);
analyzing (204) the software update request to determine which attributes are impacted;
extracting (206) from the software update request, the parameters that control the impacted attributes;
verifying (208) that the extracted parameters are within required safe performance limits;
rejecting (201) the software update request when the extracted parameters are not within the required safe performance limits; and
updating (212) the present parameters in the software with the extracted parameters when the extracted parameters are within the required safe performance limits.

2. The method (200) as claimed in claim 1, comprising generating a notification to the user if the software update request is rejected.

3. The method (200) as claimed in claim 1, wherein updating the present parameters in the software with the extracted parameters, comprises:
storing the present parameters from the software, as the backup parameters in a memory (110); and
overwriting the present parameters with the extracted parameters.

4. The method (200) as claimed in claim 1, comprising determining whether the extracted parameters have a negative impact on the vehicle performance, by performing at least one of:
running diagnostic algorithms;
analyzing Diagnostic Trouble Codes; and
analyzing system logs.

5. The method (200) as claimed in claim 4, comprising restoring the backup parameters as present parameters in the software, when the extracted parameters have a negative impact on the vehicle performance.

6. The method (200) as claimed in claim 5, comprising generating a report and sending it to the server 106 or the service equipment 107, when the request is rejected, the report comprising: the software update version, the extracted parameters, reasons for failure and a time stamp.

7. The method (200) as claimed in claim 5, comprising:
comparing the attributes from the request with the present attributes to determine whether there are any new features present in the attributes in the request; and
updating the present attributes with the attributes form the request which have new features;
when the extracted parameters do not have a negative impact on the vehicle performance.

8. The method (200) as claimed in claim 1, wherein determining which attributes are impacted, comprises determining at least one attribute from the group:
State of Charge, estimation, State of Health, monitoring, Throttle response tuning, Regenerative braking control, Anti-lock Braking System, ABS, modulation strategy, Suspension damping control settings, Audio equalizer settings, Voice command recognition tuning and Automatic emergency braking, activation logic;
listed in the software update request.

9. The method (200) as claimed in claim 1, wherein extracting the parameters form the software request comprises extracting at least one of:
Voltage thresholds, current draw profile, temperature compensation factors, Charge cycle count, internal resistance trends, temperature degradation coefficient, Pedal position-to-throttle mapping, ramp-up rate, idle compensation, Regenerative intensity level, speed thresholds, deceleration curve, Brake pressure release rate, frequency of intervention, wheel deceleration limit, Bass/mid/treble levels, surround sound mode and noise cancellation strength;
listed in the software update request.

10. A device (102) for updating a software in a vehicle (105), the device (102) comprising:
a processor (108); and
a memory (110) coupled to the processor (108);
the processor (108) configured to:
receive a software update request, the software update request being from Over the Air request from a server or from a service equipment;
analyze the software update request to determine which attributes are impacted;
extract from the software update request, the parameters that control the impacted attributes;
verify that the extracted parameters are within required safe performance limits;
reject the software update request when the extracted parameters are not within the required safe performance limits; and
update the parameters in the present software with the extracted parameters when the extracted parameters are within the required safe performance limits.

11. The device (102) as claimed in claim 10, comprising:
a communication unit (114) to transmit and receive data from the device (102).

12. The device (102) as claimed in claim 10, wherein the communication unit (114) is configured to establish a wireless communication with a server (106).

13. The device (102) as claimed in claim 10, wherein the communication unit (114) is configured to establish at least one of a wired communication and a wireless communication with a diagnostic tool (107).

14. The device 102 as claimed in claim 10 is connectable to an Electronic Control Unit, ECU, in the vehicle (105) to monitor vehicle performance.

15. The device 102 as claimed in claim 10 is implemented in an existing Electronic Control Unit in the vehicle (105).
